# EUROPEAN PATENT APPLICATION

(11) **EP 4 131 578 A1**
(43) Date of publication of application: **08.02.2023**
(21) Application number: 21780258.6
(22) Date of filing: 01.02.2021
(51) Int. Cl.: H01M 10/653, H01M 10/625, H01M 10/6556, H01M 10/6554, C08L 71/12, C08L 25/06, C08L 77/00, C08J 5/04, C08K 7/02, C08K 3/04

(54) **ELECTRIC VEHICLE BATTERY MODULE FRAME**

(30) Priority: 31.03.2020 KR 20200039243
(71) Applicant: LS Cable & System Ltd., Anyang-si, Gyeonggi-do 14119 (KR)
(72) Inventor: LEE, Jae Ik, Seoul 06372 (KR); CHO, Min Sang, Seoul 02225 (KR); YOO, Dong Kyun, Suwon-si Gyeonggi-do 16426 (KR); HONG, Young Ho, Seoul 06305 (KR)
(74) Representative: K&L Gates LLP
(86) International application number: PCT/KR2021/001265
(87) International publication number: WO 2021/201407

(57) **Abstract**

Provided is an electric vehicle battery module frame. Specifically, the present invention relates to an electric vehicle battery module frame that has excellent dimensional precision and strength to stably support and protect an electric vehicle battery module, is capable of stably maintaining a temperature of the electric vehicle battery module through a high heat dissipation effect to improve the performance of a battery, is advantageous in reducing weight, and contributes to reducing manufacturing costs.

## Description

### [Technical Field]

The present invention relates to an electric vehicle battery module frame. Specifically, the present invention relates to an electric vehicle battery module frame that has excellent dimensional precision and strength to stably support and protect an electric vehicle battery module, is capable of stably maintaining a temperature of the electric vehicle battery module through a high heat dissipation effect to improve the performance of a battery, is advantageous in reducing weight, and contributes to reducing manufacturing costs.

### [Background Art]

The stability and performance of a battery are most important factors that determine the marketability, such as an available mileage, of an electric vehicle. In particular, the performance of the battery is greatly influenced by an ambient temperature, and generally, appropriate performance can be achieved when a temperature of the battery is maintained at 0 to 40 °C.

However, the ambient temperature may increase due to heat generated when the battery is charged or discharged (operated), thus reducing the performance of the battery. In addition, the battery should be protected from impact against a nearby object or due to an accident or vibration of the electric vehicle and thus a frame is used to mount the battery therein so as to stably support and protect the battery.

An existing battery module frame may be provided in a metal box to accommodate battery cells constituting a battery module, and the metal frame may have high mechanical strength to stably protect the battery cells from external impacts and have high thermal conductivity to quickly discharge heat emitted from the battery cells to the outside of the battery module.

In general, a battery of about 360 to 400 kg is necessary for an electric vehicle to drive the same distance as a vehicle with an internal combustion engine, and a weight of a battery module frame is about 10 to 20% of the weight of the electric vehicle. Therefore, when the weight of the battery module frame can be reduced, more battery cells can be mounted to increase a driving distance.

Therefore, a metal material of a battery module frame is changing from an iron material with a specific gravity of 7.8 g/cm² to an aluminum material with a specific gravity of 2.7 g/cm² to reduce weight, but generally, the aluminum material is difficult to mold and thus the productivity thereof is low. In addition, because the aluminum material is manufactured by an extrusion process, an additional process such as chamfering, i.e., a process of giving a slope to or rounding the corners of each component having cross sections, is required, thus increasing processing costs.

In particular, a battery module frame of an electric vehicle should have a precisely standardized space to accommodate a predetermined number of battery cells so as to stably protect a battery module from impact due to vibration of the electric vehicle, and ensure dimensional stability with, for example, a very precise tolerance of ±0.3 mm in terms of a distance between battery cells, a position of the battery cells in a battery pack, etc. However, a metal battery module frame of the related art is difficult to mold and thus is difficult to sufficiently ensure dimensional accuracy.

Recently, a plastic material that is lighter in weight than an aluminum material has been used to reduce weight, but in general, the thermal conductivity of plastic is much lower than that of a metal material, thus reducing heat dissipation characteristics. Although plastic may be filled with a thermally conductive fiber or an additive to improve heat dissipation performance, such a material is expensive and has heat dissipation performance lower than that of a metal material.

Therefore, there is a desperate need for an electric vehicle battery module frame that has excellent dimensional precision and strength to stably support and protect an electric vehicle battery module, is capable of stably maintaining a temperature of the electric vehicle battery module through a high heat dissipation effect to improve the performance of a battery, is advantageous in reducing weight, and contributes to reducing manufacturing costs.

### [Disclosure]

### [Technical Problem]

The present invention is directed to providing an electric vehicle battery module frame having excellent dimensional precision and strength to stably support and protect an electric vehicle battery module.

The present invention is also directed to providing an electric vehicle battery module frame capable of stably maintaining a temperature of an electric vehicle battery module through an excellent heat dissipation effect to improve the performance of a battery.

The present invention is also directed to providing an electric vehicle battery module frame that contributes to reducing weight and manufacturing costs.

### [Technical Solution]

According to an aspect of the present invention,
provided is an electric vehicle battery module frame comprising: an upper housing having an open lower surface and an empty space for mounting a battery module therein; and a lower plate coupled to the open lower surface of the upper housing, wherein the upper housing is formed of a plastic material, the lower plate is formed of a metal material or a thermally conductive plastic material, and the lower plate has a thermal conductivity of 0.5 to 1,000 W/m·K.

According to another aspect of the present invention, provided is the electric vehicle battery module frame, wherein the upper housing and the lower plate are coupled by insert injection molding.

According to other aspect of the present invention, provided is the electric vehicle battery module frame, wherein a surface of the lower plate coupled to the upper housing is at least partially curved or has a notch or a hole, and a length of the lower plate when stretched tight is 10% or more greater than a distance between opposite ends of the lower plate before stretched tight.

According to other aspect of the present invention, provided is the electric vehicle battery module frame, wherein a surface of the lower plate coupled to the upper housing has a surface roughness (Ra) of 6 or more, a surface roughness (Rmax) of 25 or more, and a surface roughness (Rz) of 25 or more.

According to other aspect of the present invention, provided is the electric vehicle battery module frame, wherein the upper housing has a tensile strength of 30 to 500 MPa according to ASTM D638 standard, a flexural strength of 50 to 400 MPa according to ASTM D790 standard, a burning time of 60 seconds or less according to a UL-94 V standard test, a heat deflection temperature of 50 to 300 °C according to ASTM D648 standard, an Izod impact strength of 1 kJ/m² or more according to ASTM D256 standard, and a shrinkage rate of 0.03 to 3% according to ASTM D955 standard.

According to other aspect of the present invention, provided is the electric vehicle battery module frame, wherein the plastic material of the upper housing comprises at least one type of engineering plastic selected from the group consisting of polyamide (PA), modified polyphenylene oxide (mPPO), polybutyl terephthalate (PBT), polyethyl terephthalate(PET), polycarbonate(PC), and epoxy, and at least one reinforcing additive selected from the group consisting of glass fiber, carbon fiber, aramide fiber, carbon nanotubes, graphene, and carbon black.

According to other aspect of the present invention, provided is the electric vehicle battery module frame, wherein the engineering plastic comprises modified polyphenylene oxide (mPPO), wherein the modified polyphenylene oxide (mPPO) comprises a composite resin that is a mixture of polyphenylene oxide (PPO) as a base resin and polystyrene (PS) or polyamide (PA) as an additional resin, and the base resin and the additional resin are mixed at a ratio by weight of 95:5 or 20:80.

According to other aspect of the present invention, provided is the electric vehicle battery module frame, wherein the reinforcing additive is contained in an amount of 3 to 100 parts by weight based on 100 parts by weight of the engineering plastic.

According to other aspect of the present invention, provided is the electric vehicle battery module frame, wherein the thermally conductive plastic material comprises: at least one type of engineering plastic selected from the group consisting of polyamide (PA), modified polyphenylene oxide (mPPO), polybutyl terephthalate (PBT), polyethyl terephthalate (PET), polycarbonate (PC), and epoxy; and at least one thermally conductive additive selected from the group consisting of carbon fiber, carbon nanotubes, graphene, aluminum nitride, boron nitride, silicon carbide, carbon black, and metal powder.

According to other aspect of the present invention, provided is the electric vehicle battery module frame, wherein the thermally conductive additive is contained in an amount of 3 to 200 parts by weight based on 100 parts by weight of the engineering plastic.

According to other aspect of the present invention, provided is the electric vehicle battery module frame, wherein a cooling plate with a refrigerant flow path through which a refrigerant flows is disposed on a lower part of the lower plate.

According to other aspect of the present invention, provided is the electric vehicle battery module frame, wherein a ratio of a planar cross-sectional area of the refrigerant flow path to an entire planar cross-sectional area thereof measured on a cross section of the cooling plate on which a planar cross section of the refrigerant flow path is maximum among cross sections of the cooling plate is 50% or more.

### [Advantageous Effects]

In an electric vehicle battery module frame according to the present invention, excellent dimensional precision and strength can be achieved through a combination of an upper housing formed of a certain plastic material and a lower plate having thermal conductivity of a certain level or more, thereby stably supporting and protecting an electric vehicle battery module, and a temperature of the electric vehicle battery module can be maintained stably through an excellent heat dissipation effect, thereby improving battery performance.

In addition, the electric vehicle battery module frame according to the present invention is formed of a certain plastic material and thus is advantageous in reducing weight and manufacturing costs.

### [Description of Drawings]

FIG. 1 is a schematic exploded perspective view of an electric vehicle battery module frame according to an embodiment of the present invention.
FIG. 2 is a schematic perspective view of the electric vehicle battery module frame shown in FIG. 1.
FIG. 3 is a schematic exploded perspective view of an electric vehicle battery module frame according to another embodiment of the present invention.
FIG. 4 is a schematic perspective view of the electric vehicle battery module frame shown in FIG. 3.
FIG. 5 schematically illustrates an embodiment in which a cooling plate is disposed on a lower part of the electric vehicle battery module frame shown in FIG. 2.

### [Mode for Invention]

Hereinafter, exemplary embodiments of the present invention will be described in detail. The present invention is, however, not limited thereto and may be embodied in many different forms. Rather, the embodiments set forth herein are provided so that this disclosure may be thorough and complete and fully convey the scope of the invention to those of ordinary skill in the art. Throughout the specification, the same reference numbers represent the same elements.

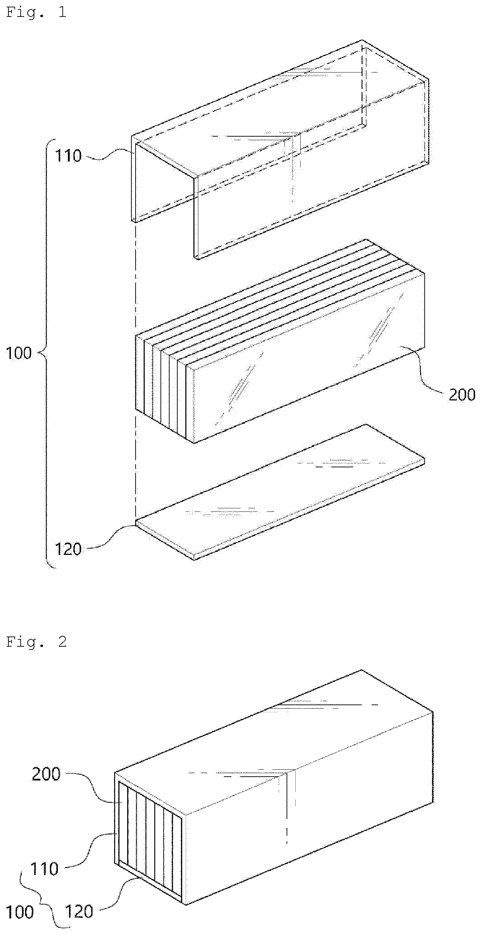

FIG. 1 is a schematic exploded perspective view of an electric vehicle battery module frame according to an embodiment of the present invention, and FIG. 2 is a schematic perspective view of the electric vehicle battery module frame shown in FIG. 1.

As shown in FIGS. 1 and 2, an electric vehicle battery module frame 100 according to the present invention may include a ' 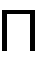 '-shaped upper housing 110 having an open lower surface, an empty space in which a battery module with a plurality of battery cells may be mounted, and open front and rear surfaces into which the battery module is insertable, and a lower plate 120 coupled to the open lower surface of the upper housing 110.

Here, the upper housing 110 may be formed of a plastic material. The upper housing 110 is formed of a plastic material and thus is injection-moldable unlike a metal frame of the related art, thus greatly improving dimensional precision, and therefore, the inner walls of the upper housing 110 and a battery module may be brought into close contact with each other to minimize an empty space therebetween, thereby more stably supporting and protecting the battery module even the vibration of an electric vehicle and preventing a reduction of a heat dissipation effect due to the empty space.

Specifically, the plastic material may be engineering plastic, such as polyamide (PA), modified polyphenylene oxide (mPPO), polybutyl terephthalate (PBT), polyethyl terephthalate (PET), polycarbonate (PC), or epoxy, and preferably, engineering plastic, e.g., modified polyphenylene oxide (mPPO), to which a reinforcing additive, such as glass fiber, carbon fiber, aramid fiber, carbon nanotubes, graphene, or carbon black, and preferably glass fiber is added.

Here, an amount of the reinforcing additive may be 3 to 100 parts by weight, preferably 5 to 80 parts by weight, and more preferably 5 to 70 parts by weight, based on 100 parts by weight of the engineering plastic. When the amount of the reinforcing additive is less than 3 parts by weight, desired mechanical characteristics such as tensile strength and flexural strength of the upper housing 110 may not be satisfied, whereas when the amount of the upper housing 110 is greater than 100 parts by weight, a screw of an injection machine, a mold, etc. may be worn seriously during injection molding to manufacture the upper housing 110, thus reducing productivity and increasing the weight of the plastic material. Thus, the weight of the upper housing 110 may increase and some mechanical characteristics such as impact strength may decrease.

In particular, the modified polyphenylene oxide (mPPO) may include a composite resin that is a mixture of polyphenylene oxide (PPO) as a base resin and polystyrene (PS) or polyamide (PA) as an additional resin, and polyphenylene oxide (PPO) and the additional resin such as polystyrene (PS) or polyamide (PA) may be mixed at a ratio by weight of 95:5 or 20:80, preferably 90:10 to 20:80, and more preferably 80:20 to 20:80.

Here, when the mixing ratio by weight is greater than 95:5, the processing temperature of the plastic material may be high thus moldability may decrease and manufacturing costs may increase, whereas when the mixing ratio by weight is less than 20:80, the thermal deformation temperature of the plastic material may be low and thus heat resistance and mechanical characteristics such as impact strength may decrease.

The plastic material may have excellent mechanical strength, e.g., tensile strength of 30 to 500 MPa, preferably 50 to 400 MPa, and more preferably 70 to 300 MPa, measured at a speed of 5 mm/min and under load of 20 kN according to ASTM D638 standard, and flexural strength of 50 to 400 MPa, preferably 80 to 300 MPa, and more preferably 100 to 250 MPa, measured at a speed of 5 mm/min and under load of 20 kN according to ASTM D790 standard, to protect the battery module from external impact.

Here, when the tensile strength of the plastic material is less than 30 MPa, a minimum level of mechanical characteristics necessary to protect the battery module from external impacts may not be satisfied, whereas when the tensile strength of the plastic material is greater than 500 MPa, injection molding processability may decrease and manufacturing costs may increase unnecessarily due to an excessive amount of additives.

When the flexural strength of the plastic material is less than 50 MPa, mechanical stress due to thermal expansion of the battery module may be difficult to endure, whereas when the flexural strength of the plastic material is greater than 400 MPa, injection molding processability may decrease and manufacturing costs may increase unnecessarily due to an excessive amount of additives.

Meanwhile, the plastic material may have high flame retardancy, which is resistance to a fire. For example, a burning time may be 60 seconds or less and preferably 30 seconds or less when according to a UL-94 V standard test, a sample is primarily brought into contact with a 20 mm flame for 10 seconds, and may be 90 seconds or less or preferably 60 seconds or less when the plastic material is secondarily brought into contact with a 20 mm flame for 10 seconds. For example, when according to ASTM D648 standard, a sample is immersed in oil and preheated for 5 minutes, and a temperature of the oil is increased at a rate of 120 °C/hr to evaluate a resistance to heat emitted from a battery module, a heat deflection temperature at which the sample sags by 0.254 mm may be in a range of 50 to 300 °C, preferably 80 to 270°C, and more preferably 100 to 250 °C.

Here, when the heat deflection temperature of the plastic material is less than 50 °C, the deformation (e.g., distortion) of the upper housing 110 may occur due to heat generated by the battery module, whereas when the heat deflection temperature of the plastic material is greater than 300 °C, a melting point is extremely high and thus compounding and injection molding processability may decrease greatly and manufacturing costs may unnecessarily increase.

The plastic material may have excellent low-temperature impact characteristics and thus is available even in a low-temperature environment. For example, Izod impact strength measured when a sample is cut by hitting the sample with a hammer after the sample is left in a -30 °C chamber for 30 minutes or more according to ASTM D256 standard may be 1 kJ/m² or more, preferably 3 kJ/m² or more, and more preferably 5 kJ/m² or more.

Here, when the Izod impact strength of the plastic material is less than 1 kJ/m², the battery module may be broken due to a collision accident in a low-temperature environment such as winter and thus cannot be protected appropriately. Although the low-temperature impact strength is preferably high, it is desirable to maintain the low-temperature impact strength at an appropriate level, because the low-temperature impact strength is in a trade-off relationship with tensile strength, flexural strength, flame retardancy, etc.

In addition, the plastic material may have a high shrinkage rate representing dimensional accuracy. For example, a shrinkage rate measured by injecting a mold at a temperature of 23±2 °C and a humidity of 50±5% under a temperature and separating the mold after 24±0.5 hours may be in a range of 0.03 to 3%, preferably a range of 0.05 to 2%, and more preferably a range of 0.1 to 1%. Injection molding productivity decreased due to an excessive amount of additive when the shrinkage rate was less than 0.03%, and dimensional accuracy of ±0.3 mm was not satisfied when the shrinkage rate was greater than 3%.

The upper housing 110 may have a "⊏" shape with open front and rear surfaces to allow a battery module to be inserted therein, but the front and rear surfaces may be covered with a front plate and a rear plate formed of the same plastic material as the upper housing 110.

The upper housing 110 may be coupled to the lower plate 120 formed of a material different from the material of the upper housing 110, and the upper housing 110 and the lower plate 120 may be coupled to each other by insert injection molding.

That is, the lower plate 120 may be manufactured in advance and inserted into a mold of an injection machine and thereafter a plastic material of the upper housing 110 may be injected into the mold to form a box-shaped structure. In this case, in order to increase adhesion between different materials, irregularities or the like may be formed on an adherend or a level of surface roughness of the adherend may be increased to increase an adhesion area.

The lower plate 120 may be formed of a metal material having high thermal conductivity, such as aluminum, copper, iron, etc., but may be formed of a plastic material, e.g., polyamide (PA), modified polyphenylene oxide (mPPO), polybutyl terephthalate (PBT), polyethyl terephthalate (PET), polycarbonate (PC), or epoxy, and preferably, modified polyphenylene oxide (mPPO), which is filled with a thermally conductive additive, e.g., metal powder such as carbon fiber, carbon nanotubes, graphene, aluminum nitride, boron nitride, silicon carbide, carbon black, or aluminum. The lower plate 120 when formed of a metal material to achieve heat dissipation characteristics and when formed of a plastic material may have a thermal conductivity of 0.5 to 1,000 W/m·K, preferably 1 to 600 W/m-K, and more preferably 2 to 300 W/m-K.

The performance of the battery module may decrease due to insufficient heat dissipation characteristics when the thermal conductivity of a material used to form the lower plate 120 is less than 0.5 W/m-K, whereas processing moldability may decrease and manufacturing costs may increase unnecessarily due to an excessive amount of a thermally conductive additive when the thermal conductivity of the material is greater than 1,000 W/m-K.

Specifically, when the lower plate 120 is formed of a plastic material, the thermally conductive additive may be contained in an amount of 3 to 200 parts by weight, preferably 5 to 170 parts by weight, and more preferably 10 to 150 parts by weight, based on 100 parts by weight of the engineering plastic. Here, the thermal conductivity of 0.5 W/m·K or more is difficult to achieve when the amount of the thermally conductive additive is less than 3 parts by weight, and the specific gravity of the plastic material is greater than 2 g/cm³ and thus the battery module frame may not be sufficiently light when the amount of the thermally conductive additive is greater than 200 parts by weight.

A surface of the lower plate 120 coupled to the upper housing 110 may not be flat and may be at least partially curved or have a notch or a hole, and for example, a length of the surface when stretched tight may be 10% or more, preferably 20% or more, and more preferably 30% or more greater than a length between opposite ends of the surface before stretched tight. Thus, a contact area between the lower plate 120 and the upper housing 110 coupled to each other may be maximized so that they may be adhered and coupled to each other more firmly.

Specifically, a surface roughness Ra of a coupling surface of the lower plate 120 may be 6 or more and preferably 25 or more, a surface roughness Rmax may be 25 or more and preferably 100 or more, and a surface roughness Rz may be 25 or more and preferably 100 or more.

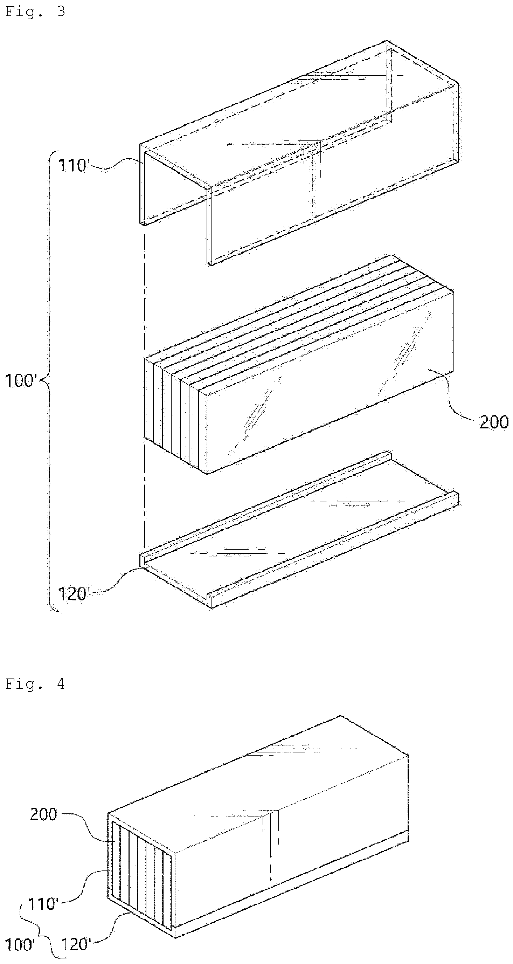

FIG. 3 is a schematic exploded perspective view of an electric vehicle battery module frame according to another embodiment of the present invention, and FIG. 4 is a schematic perspective view of the electric vehicle battery module frame shown in FIG. 3.

As shown in FIGS. 3 and 4, in an electric vehicle battery module frame 100' according to the present invention, both a lower plate 120' and an upper housing 110' may have a '⊏' shape and thus the dimensional accuracy of an internal empty space in which a battery module is mounted may be further improved.

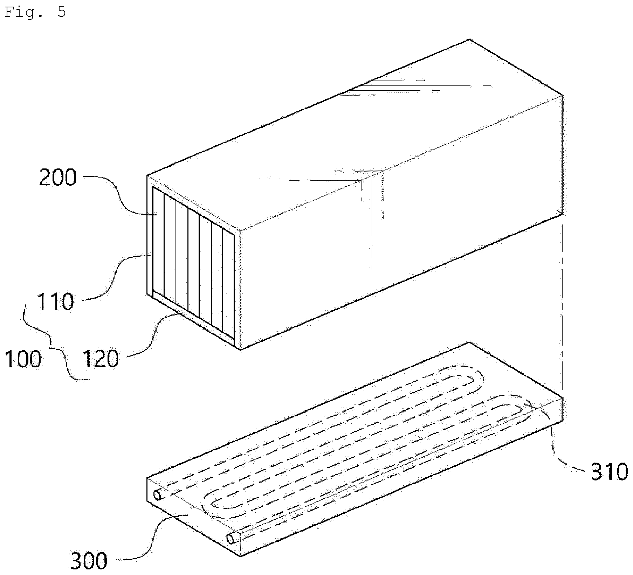

FIG. 5 schematically illustrates an embodiment in which a cooling plate is disposed on a lower part of the electric vehicle battery module frame shown in FIG. 2.

As shown in FIG. 5, a cooling plate 300 with a refrigerant flow path through which a refrigerant such as cooling water may flow may be disposed on a lower part of the lower plate 120.

The cooling plate 300 may include a refrigerant flow path 310 through which a refrigerant such as cooling water may flow, and may be formed of a metal material such as aluminum. The lower plate 120 has higher thermal conductivity than the upper housing 110 and thus may quickly absorb most of heat energy from a battery module and transfer the absorbed heat energy to the cooling plate 300, thereby radiating heat.

Here, a ratio of a planar cross-sectional area of the refrigerant flow path 310 to an entire planar cross-sectional area measured on a cross section of the cooling plate 300 on which a planar cross section of the refrigerant flow path 310 is maximum among cross sections of the cooling plate 300 may be about 50% or more and preferably about 70% or more, and thus a heat dissipation ratio, i.e., a ratio of a heating value of the cooling plate 300 to a total heating value of the battery module frame may be 70% or more and preferably 80% or more. When the ratio of a planar cross-sectional area of the refrigerant flow path 310 to an entire planar cross-sectional area is less than 50% or the heat dissipation ratio is less than 70%, a degree to which heat energy absorbed quickly by the lower plate 300 and heat dissipation characteristics may be insufficient.

### [Examples]

### 1. Preparation example

Battery module frames of the same size were manufactured using components shown in the table below.

**[Table 1]**

| | Example 1 | Example 2 | Comparative example 1 | Comparative example 2 |
|---|---|---|---|---|
| upper housing | plastic 1 | plastic 1 | plastic 1 | aluminum |
| lower plate | aluminum | plastic 2 | plastic 1 | aluminum |
| cooling plate | aluminum | aluminum | aluminum | aluminum |

| | | | | |
|---|---|---|---|---|
| - plastic 1: modified polyphenylene oxide+glass fiber (thermal conductivity: 0.4 W/m·K) - plastic 2: thermally conductive plastic (thermal conductivity: 1 W/m·K) - aluminum: 6,000 series aluminum | | | | |

### 2. evaluation of heat radiation characteristics

A heating value and a heat dissipation ratio on each surface of the battery module frames of the examples and the comparative examples were calculated by attaching a thermocouple onto each surface of the battery module frames, supplying heat by electrically generating heat in a battery module mounted in each of the battery module frame while moving cooling water in a cooling plate (density: 1069 kg/m²; kinematic viscosity: 0.002758 kg/ms; and flow rate: 0.02 m/s), and measuring the temperature of the thermocouple. Evaluation results are as shown in Table 2 below.

**[Table 2]**

| | | upper surface | | lower surface | | left side | | rear surface | |
|---|---|---|---|---|---|---|---|---|---|
| Example 1 | cooling water area ratio (%) | 50 | 70 | 50 | 70 | 50 | 70 | 50 | 70 |
| | heating value (W) | 8.4 | 8.7 | 73.2 | 74.9 | 3.9 | 3.6 | 1.7 | 1.5 |
| | heat dissipation ratio (%) | 9.1 | 8.4 | 79.2 | 80.7 | 4.2 | 3.8 | 1.8 | 1.7 |
| | maximum temperature (°C) | 37.4 | 36.3 | 36.9 | 35.6 | 36.8 | 35.6 | 37.4 | 36.3 |
| Example 2 | cooling water area ratio (%) | 50 | 70 | 50 | 70 | 50 | 70 | 50 | 70 |
| | heating value (W) | 9.7 | 9.4 | 70.2 | 71.9 | 4.6 | 4.3 | 1.8 | 1.6 |
| | heat dissipation ratio (%) | 10.5 | 10.1 | 75.7 | 77.5 | 4.9 | 4.9 | 1.9 | 2.0 |
| | maximum temperature (°C) | 39.9 | 38.3 | 38.5 | 36.2 | 37.9 | 36.9 | 38 | 37.4 |
| Comparative example 1 | cooling water area ratio (%) | 50 | 70 | 50 | 70 | 50 | 70 | 50 | 70 |
| | heating value (W) | 10.8 | 10 | 68.1 | 70.2 | 4.9 | 4.4 | 2.1 | 1.9 |
| | heat dissipation ratio (%) | 11.6 | 10.8 | 73.4 | 7 5. | 5.3 | 4.7 | 2.3 | 2.1 |
| | maximum temperature (°C) | 41.5 | 40.1 | 38.7 | 36.5 | 40.2 | 38.5 | 40.6 | 39.9 |
| Comparative example 2 | cooling water area ratio (%) | 50 | 70 | 50 | 70 | 50 | 70 | 50 | 70 |
| | heating value (W) | 8.3 | 7.8 | 73.4 | 7 4 . | 3.9 | 3.6 | 1.6 | 1.5 |
| | heat dissipation ratio (%) | 9 | 8.4 | 79.2 | 8 0 . | 4.2 | 3.9 | 1.8 | 1.6 |
| | maximum temperature (°C) | 37.1 | 35.2 | 36.5 | 35.5 | 36.8 | 35.8 | 36.9 | 36 |

As shown in Table 1 above, the battery module frames of Examples 1 and 2 in which an upper housing is formed of a plastic material and a lower plate is formed of an aluminum material or a thermally conductive plastic material are better in heat dissipation characteristics than Comparative example 1 in which both an upper housing and a lower plate are formed of a plastic material, and are not significantly different in terms of heat dissipation characteristics than Comparative example 2 in which both an upper housing and a lower plate are formed of an aluminum material and are about 39% lighter than Comparative example 2.

While the present invention has been described above with respect to exemplary embodiments thereof, it would be understood by those of ordinary skilled in the art that various changes and modifications may be made without departing from the technical conception and scope of the present invention defined in the following claims. Thus, it is clear that all modifications are included in the technical scope of the present invention as long as they include the components as claimed in the claims of the present invention.

## Claims

1. An electric vehicle battery module frame comprising:
an upper housing having an open lower surface and an empty space for mounting a battery module therein; and
a lower plate coupled to the open lower surface of the upper housing,
wherein the upper housing is formed of a plastic material,
the lower plate is formed of a metal material or a thermally conductive plastic material, and
the lower plate has a thermal conductivity of 0.5 to 1,000 W/m·K.

2. The electric vehicle battery module frame of claim 1, wherein the upper housing and the lower plate are coupled by insert injection molding.

3. The elctric vehicle battery module frame of claim 1 or 2, wherein a surface of the lower plate coupled to the upper housing is at least partially curved or has a notch or a hole, and a length of the lower plate when stretched tight is 10% or more greater than a distance between opposite ends of the lower plate before stretched tight.

4. The electric vehicle battery module frame of claim 1 or 2, wherein a surface of the lower plate coupled to the upper housing has a surface roughness (Ra) of 6 or more, a surface roughness (Rmax) of 25 or more, and a surface roughness (Rz) of 25 or more.

5. The electric vehicle battery module frame of claim 1 or 2, wherein the upper housing has a tensile strength of 30 to 500 MPa according to ASTM D638 standard, a flexural strength of 50 to 400 MPa according to ASTM D790 standard, a burning time of 60 seconds or less according to a UL-94 V standard test, a heat deflection temperature of 50 to 300 °C according to ASTM D648 standard, an Izod impact strength of 1 kJ/m² or more according to ASTM D256 standard, and a shrinkage rate of 0.03 to 3% according to ASTM D955 standard.

6. The electric vehicle battery module frame of claim 5, wherein the plastic material of the upper housing comprises at least one type of engineering plastic selected from the group consisting of polyamide (PA), modified polyphenylene oxide (mPPO), polybutyl terephthalate (PBT), polyethyl terephthalate(PET), polycarbonate(PC), and epoxy, and at least one reinforcing additive selected from the group consisting of glass fiber, carbon fiber, aramide fiber, carbon nanotubes, graphene, and carbon black.

7. The electric vehicle battery module frame of claim 6, wherein the engineering plastic comprises modified polyphenylene oxide (mPPO),
wherein the modified polyphenylene oxide (mPPO) comprises a composite resin that is a mixture of polyphenylene oxide (PPO) as a base resin and polystyrene (PS) or polyamide (PA) as an additional resin, and
the base resin and the additional resin are mixed at a ratio by weight of 95:5 or 20:80.

8. The electric vehicle battery module frame of claim 7, wherein the reinforcing additive is contained in an amount of 3 to 100 parts by weight based on 100 parts by weight of the engineering plastic.

9. The electric vehicle battery module frame of claim 1 or 2, wherein the thermally conductive plastic material comprises:
at least one type of engineering plastic selected from the group consisting of polyamide (PA), modified polyphenylene oxide (mPPO), polybutyl terephthalate (PBT), polyethyl terephthalate (PET), polycarbonate (PC), and epoxy; and
at least one thermally conductive additive selected from the group consisting of carbon fiber, carbon nanotubes, graphene, aluminum nitride, boron nitride, silicon carbide, carbon black, and metal powder.

10. The electric vehicle battery module frame of claim 9, wherein the thermally conductive additive is contained in an amount of 3 to 200 parts by weight based on 100 parts by weight of the engineering plastic.

11. The electric vehicle battery module frame of claim 1 or 2, wherein a cooling plate with a refrigerant flow path through which a refrigerant flows is disposed on a lower part of the lower plate.

12. The electric vehicle battery module frame of claim 11, wherein a ratio of a planar cross-sectional area of the refrigerant flow path to an entire planar cross-sectional area thereof measured on a cross section of the cooling plate on which a planar cross section of the refrigerant flow path is maximum among cross sections of the cooling plate is 50% or more.
